# EUROPÄISCHE PATENTSCHRIFT

(11) **EP 1 339 578 B1**
(45) Veröffentlichungstag und Bekanntmachung des Hinweises auf die Patenterteilung: **19.04.2006**
(21) Anmeldenummer: 01989427.8
(22) Anmeldetag: 24.10.2001
(51) Int. Cl.: B60T 8/00, G01P 21/02, G01P 3/48, G01P 3/489, G01D 3/08

(54) **AKTIVER MAGNETSENSOR FÜR ELEKTRONISCHE BREMSSYSTEME**
ACTIVE MAGNETIC SENSOR FOR ELECTRONIC BRAKING SYSTEMS
CAPTEUR MAGNETIQUE ACTIF DESTINE A DES SYSTEMES DE FREINAGE ELECTRIQUES

(30) Priorität: 22.11.2000 DE 10058138; 24.09.2001 DE 10146949
(43) Veröffentlichungstag der Anmeldung: 03.09.2003
(73) Patentinhaber: Continental Teves AG & Co. oHG, 60488 Frankfurt am Main (DE)
(72) Erfinder: FEY, Wolfgang, 65527 Niedernhausen (DE); LOHBERG, Peter, 61381 Friedrichsdorf (DE); BRÜGGEMANN, Stephan, 60431 Frankfurt/Main (DE); ZYDEK, Michael, 60529 Frankfurt am Main (DE)
(86) Internationale Anmeldenummer: PCT/EP2001/012268
(87) Internationale Veröffentlichungsnummer: WO 2002/042133

(56) Entgegenhaltungen:
- WO-A-02/03079
- WO-A-99/49322
- DE-A- 19 545 436
- DE-A- 19 618 867
- DE-A- 19 634 715
- DE-A- 19 710 363

## Beschreibung

Die Erfindung betrifft einen aktiven Sensor gemäß Oberbegriff von Anspruch 1 und eine Anordnung gemäß Oberbegriff von Anspruch 8.

Aktive Sensoren zur Raddrehzahlerfassung in Kraftfahrzeugantiblockiersystemen (ABS) und Fahrdynamikregelungen (ESP) sind bekannt. In der Deutschen Patentanmeldung DE 196 34 715 A1 ist ein gattungsgemäßer Sensor zur Erfassung der Raddrehzahl beschrieben, welcher über eine zweipolige Stromschnittstelle zur Übertragung der Raddrehzahlinformation mit einem elektronischen Bremsensteuergerät (ECU) verbunden ist. Die elektrische Versorgung eines entsprechenden "aktiven Sensors" erfolgt über eine mit dem elektronischen Bremsensteuergerät verbundene Signalschnittstelle.

Aus der DE 196 18 867 A1 ist ein aktiver Raddrehzahlsensor gemäß Oberbegriff von Anspruch 1 bekannt. Bei dem vorbekannten Radsensor wird dem impulsförmigen Ausgangssignal im Falle eines Sensorfehlers (z.B. Unterspannung) ein Stromoffset überlagert.

In der DE 196 34 715 A1 ist ein aktiver Raddrehzahlsensor beschrieben, welcher ebenfalls Stromquellen zum Aufprägen von Stromimpulsen auf das an ein Kraftfahrzeugsteuergerät zu übertragende Signal umfasst, wobei die Stromquelle durch einen externen Zusatzeingang angesteuert werden kann, so dass Statusinformationen in Form von Zusatzstromimpulsen zwischen den die Raddrehzahlinformation übertragenden Impulsen übertragen werden können.

Es hat sich gezeigt, daß im Betrieb von Raddrehzahlsensoren im Bereich der elektrischen Zuführung zwischen elektronischem Steuergerät und Sensor ein unerwünscht hoher ohmscher Widerstand, verursacht beispielsweise durch Korrosion an den Steckverbindungen, auftreten kann, welcher den ordnungsgemä-ßen Betrieb des Raddrehzahlsensors beeinträchtigt. Eine Erkennung entsprechender Fehler ist häufig beispielsweise dann erschwert, wenn hochohmige Kontakte nur zeitweise auftreten.

Aufgabe der vorliegenden Erfindung ist es, einen Raddrehzahlsensor vorzuschlagen, welcher eine Erkennung von Leitungsfehlern durch ein mit dem Sensor verbundenes elektronisches Steuergerät erlaubt.

Diese Aufgabe wird gelöst durch einen aktiven Sensor gemäß Anspruch 1.

Unter einem aktiven Sensor wird im Sinne der Erfindung ein Sensor mit elektronischen Bauelementen zur Auswertung des elektrischen Signals eines magnetoelektrischen Wandlers (Hall-Sensor oder magnetoresistiver Sensor) verstanden, wobei die in der Regel aktiven elektronischen Bauelemente über den oder die Signalausgänge des Sensors elektrisch versorgt werden.

In einer Anordnung zur Erfassung der Drehzahl eines Kraftfahrzeugrades ist in der Regel ein sogenannter Encoder, welcher ein Stahlzahnrad oder ein periodisch magnetisierter Ring sein kann, mit einem Radlager oder in sonstiger Weise verbunden. Durch den Encoder wird der magnetoelektrische Wandler während dessen Drehung magnetisch erregt, so daß dieser ein periodisches elektrisches Signal, z.B. mit einer Periodenzahl, die der Anzahl der am Sensor vorbeibewegten Zähnezahl entspricht, erzeugt. Aus dem elektrischen periodischen Signal werden dann gemäß einer weiter unten beschriebenen besonders bevorzugten Ausführungsform rechteckförmige Raddrehzahlimpulse erzeugt, die an ein elektronisches Steuergerät über eine Stromschnittstelle übertragen werden.

Der Sensor nach der Erfindung kann zwei oder drei Ausgangsleitungen zur Verbindung mit einem elektronischen Steuergerät aufweisen. Der Sensor kann auch als sogenannter "Ein-Draht-Sensor" ausgeführt sein, wenn eine der elektrischen Zuleitungen als Masseanschluß über die Fahrzeugkarosserie geführt wird.
Vorzugsweise weist der aktive Sensor nach der Erfindung eine Zweidraht-Stromschnittstelle auf.

Mit dem aktiven Magnetsensor nach der Erfindung können Raddrehzahlinformationen an ein Steuergerät eines elektronischen Bremssystems über eine Stromschnittstelle übertragen werden. Vorzugsweise werden daher durch die Stromquellengruppe auf den Signalstrom Drehzahlstromimpulse aufmoduliert, die insbesondere rechteckförmig sind. Besonders bevorzugt handelt es sich um Stromimpulse, welche eine fest definierte Länge besitzen, so daß die Drehzahlinformation durch den Abstand der Impulse angegeben wird.

Durch die Unterspannungsüberwachungsschaltung wird der Strom am Ausgang des Sensors beeinflußt, wenn eine Unterspannung erkannt wurde durch Vergleich der aktuellen Spannung mit einem vorgegebenen Schwellenwert, welcher zweckmäßigerweise mit einem Komparator durchgeführt wird. Wird der vorgegebene Schwellenwert unterschritten, veranlaßt die Unterspannungsüberwachungsschaltung bevorzugt die Ausgabe eines charakteristischen Signalmusters, welches bezüglich der im Normalbetrieb vorkommenden Signale signifikant unterschiedlich ist. Bei diesem Signal handelt es sich insbesondere um einen niedrigen Konstantstrom, welcher unterhalb der Amplituden der übertragbaren Impulse liegt.

Zwischen den Drehzahlstromimpulsen können durch die Stromquellengruppe auf den Signalstrom bevorzugt Zusatzstromimpulse zur Übertragung von Zusatzinformationen aufmoduliert werden. Diese Zusatzsignale haben zweckmäßigerweise eine geringere Amplitude als die Raddrehzahlimpulse.

Der Magnetsensor umfaßt vorzugsweise auch eine Beobachtungsschaltung entsprechend der Anordnung in der oben erwähnten DE 196 34 715 A1, welche in Abhängigkeit der Spannung am Sensorausgang eine Einspeisung von Zusatzsignalen auf das Drehzahlsignal, insbesondere durch Beeinflussung der in Sensor vorhandenen Stromquellengruppe oder des vorhandenen Modulators, vornimmt. Hierdurch kann der Magnetsensor auf von außen über den "Ausgang" zugeführte Spannungsmodulationen zum Zwecke der Signalübermittlung an den Sensor reagieren. Dies ist insbesondere dann sinnvoll, wenn durch ein elektronisches Steuergerät der Sensor aufgefordert werden soll, eine bestimmte Zusatzinformation zwischen einem der nachfolgenden Raddrehzahlimpulse über die Stromschnittstelle zu senden.
Wird keine von außen aktivierbare oder beeinflußbare Übertragung von Zusatzsignalen oder sogar keinerlei Zusatzdatenübertragung gewünscht, kann der aktive Sensor auch ohne eine Beobachterschaltung ausgelegt sein.

Vorzugsweise ist der magnetoelektrische Wandler in einer vom Sensormodul getrennten Gehäuseeinheit angeordnet.
Es ist aber auch möglich, daß der magnetoelektrische Wandler innerhalb des Sensormoduls angeordnet ist.

Die Erfindung betrifft auch eine Anordnung gemäß Anspruch 8 bestehend aus dem zuvor beschriebenen erfindungsgemäßen Magnetsensor und mindestens einem elektronischen Steuergerät, welches insbesondere Bestandteil einer integrierten elektrohydraulischen Bremsensteuerüngseinheit ist.

Weitere bevorzugte Ausführungsformen ergeben sich aus den Unteransprüchen und der nachfolgenden Figurenbeschreibung.

Es zeigen
- Fig. 1: einen aktiven Sensor nach dem Stand der Technik,
- Fig. 2: einen aktiven Sensor gemäß der Erfindung, und
- Fig. 3: eine Darstellung des Signalverlaufs am Ausgang eines Aktivsensors.

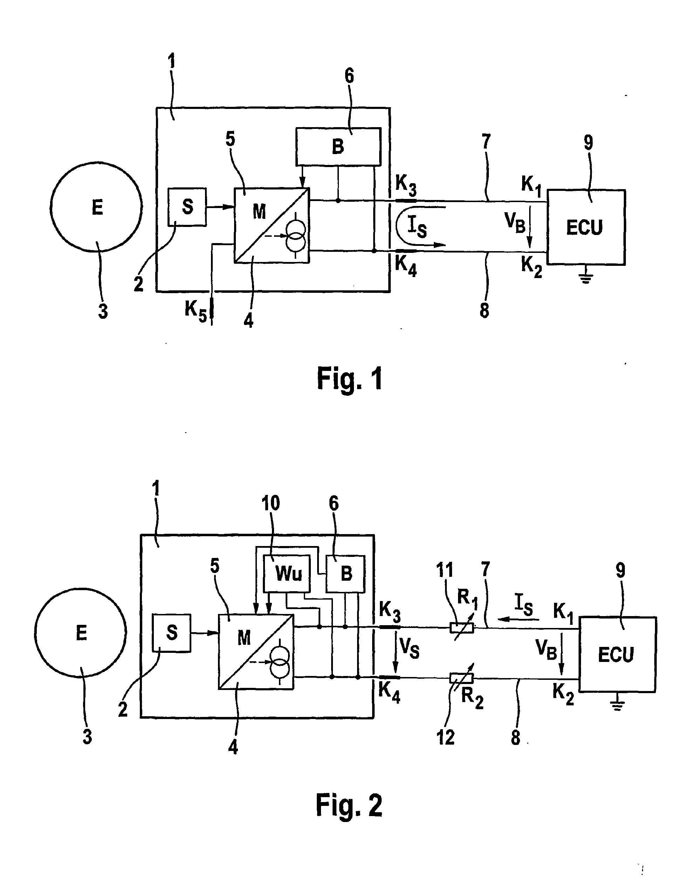

Fig. 1 zeigt die wesentlichen Funktionselemente eines aktiven Sensors entsprechend der DE 196 34 715 A1 in schematischer Darstellung. Ein Sensormodul 1 und ein elektronisches Steuergerät eines ABS-Reglers (ECU) 9 sind über eine Zweidrahtleitung 7, 8 miteinander verbunden. Encoder 3 ist ein permanentmagnetischer Encoder mit einer ringförmig geschlossenen Folge von aufmagnetisierten Nord-/Südpol-Arealen. Encoder 3 ist über einen Luftspalt magnetisch an eine magnetoresistive Brückenschaltung 2 gekoppelt, welche innerhalb des Sensormoduls 1 angeordnet ist.

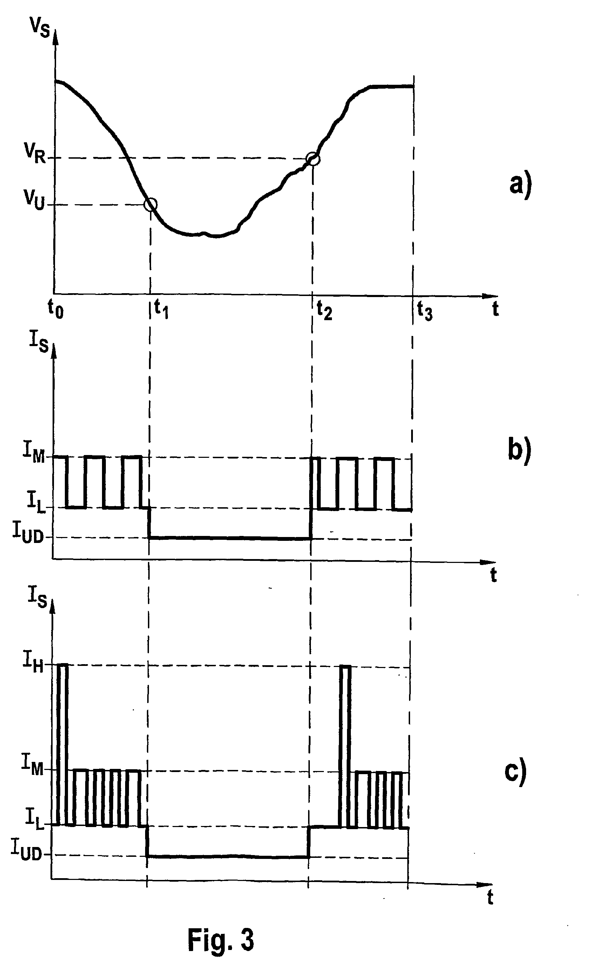

Zum Betrieb des Sensormoduls 1 ist eine Betriebsspannung V_{B} erforderlich, die von der ECU an den Klemmen K₁ und K₂ bereitgestellt wird, welche über eine Sensorleitung 7,8 mit Klemmen K₃ und K₄ (Sensorausgang) verbunden sind. Über Klemmen K₃ und K₄ des Sensormoduls fließt ein durch das Sensormodul gesteuerter S.ignalstrom I_{S} zur ECU, auf den die Raddrehzahlinformation in Form von rechteckförmigen Stromimpulsen aufgeprägt ist, wobei der Signalstrom zwischen zwei Strompegeln im Takt der durch Encoder 3 vorgegebenen Pulsfolge wechselt. Diese Pulsfolge ist in Teilbild b) von Fig. 3 innerhalb der Zeitabschnitte t₀ - t₁ oder auch t₂ - t₃ für einen Sensor ohne Zusatzsignalschnittstelle dargestellt.

Bei einem Sensor mit Zusatzdatenschnittstelle werden auf den Signalstrom entsprechend Teilbild c) von Fig. 3 Zusatzinformationen in Form einzelner Bits, z.B. über den Bremsbelagverschleiß, den Luftspalt oder die Drehrichtung, zwischen den Drehzahlimpulsen übertragen. Diese Zusatzbits werden in Form einzelner Stromimpulse in an sich bekannter Manchester-Kodierung aufmoduliert, so daß beispielsweise Signalmuster, wie nach Teilbild c) in Fig. 3 innerhalb der Zeitabschnitte t₀ - t₁ und t₂ - t₃ dargestellt, entstehen. Wie weiter unten näher erläutert wird, besitzen die Raddrehzahlimpulse bei Sensoren mit einer Einrichtung zur Übertragung von Zusatzinformationen eine größere Amplitude als die Raddrehzahlsensoren ohne eine entsprechende Einrichtung.

In der Anordnung nach Fig. 1 ist in Sensormodul 1 eine Beobachtungsschaltung 6, an den das Sensormodul mit der ECU 9 verbindenden Ausgang angeschlossen ist, integriert. Beobachtungsschaltung 6 ist mit Klemmen K₃ und K₄ verbunden, so daß die Signalspannung zum Zwecke der Kommunikation mit dem elektronischen Steuergerät abgegriffen werden kann. Beobachtungsschaltung 6 überwacht und steuert Modulator 5 in Abhängigkeit von dem Signalzustand auf den Verbindungsleitungen 7,8. Hierdurch kann die Akzeptanz oder Verarbeitung der über einen Zusatzanschluß K₅ zugeführten Information oder Signale in Abhängigkeit von vorgegebenen Kriterien, Signalzuständen oder Zeitvorgaben, welche durch das elektronische Steuergerät über die Stromschnittstelle zum Sensor gesendet werden, gesteuert werden. Die Beobachtungsschaltung 6 wirkt zu diesem Zweck auf einen Modulator 5, welcher z.B. bei einer Aufforderung durch das elektronische Steuergerät eine Folge von Zusatzsignalen zwischen den Raddrehzahlimpulsen einfügt.

In Fig. 2 ist ein aktiver Sensor nach der Erfindung dargestellt, welcher zusätzlich zu dem in Fig. 1 dargestellten Sensor eine Spannungsüberwachungsschaltung 10 enthält. Spannungsüberwachungsschaltung 10 kontrolliert die Klemmen K₃ und K₄ durch Vergleich mit einem vorgegebenen Schwellenwert. Wird z.B. durch einen unerwünscht hohen Widerstand im Bereich der Zuleitungen 7, 8 der vorgegebene Schwellenwert für die von der ECU gelieferten Versorgunsgsspannung unterschritten, veranlaßt Schaltung 10 die Ausgabe eines Dauerstroms mit konstantem Signalpegel U_{D}, welcher unterhalb der im Normalbetrieb vorkommenden Strompegel der Signalimpulse liegt.
Die Unterspannungsüberwachung kann so aufgebaut sein, daß die Klemmenspannung gegen eine interne Spannungsreferenz mittels eines Komparationsfensters verglichen wird, um zwischen V_{U} und V_{R} umzuschalten. Im Fall einer Spannung von Vᵤ wird die interne Stromquelle in Stromquelleneinheit 4 mit dem Wert I_{L} = 7 mA auf die Hälfte des Stroms (3,5 mA) eingestellt und die anderen darin enthaltenen weiteren Stromquellen, welche zur Erzeugung der Stromwerten 14 mA beziehungsweise auch 28 mA vorgesehen sind, abgeschaltet.

Fig. 3 stellt in Teilbild c) die Funktionsweise der Spannungsüberwachungsschaltung 10 am Signalverlauf des Sensorausgangs eines Sensors nach Fig. 2 an den Klemmen K₃ und K₄ dar. Dieser Sensor weist eine 3-Pegelschnittstelle mit standardisierten Strompegelsollwerten auf, die unter Berücksichtigung von geeigneten Toleranzbereichen mit I_{L} / I_{M} / I_{H} - 7 mA / 14 mA / 28 mA festgelegt sind.

Teilbild b) zeigt das Signal am Beispiel eines aktiven Sensors ohne Zusatzsignalfunktion, welcher eine 2-Pegelschnittstelle mit den festgelegten Strompegelsollwerten I_{L} / I_{M} = 7 mA / 14 mA aufweist.

In Teilbild a) ist beispielhaft der zeitliche Verlauf der an Klemmen K₃ und K₄ anliegenden Versorgungsspannung bei einem Einbruch der Sensorversorgungsspannung V_{S} dargestellt. Wenn die ECU 9 eine Versorgungsspannung mit der Spannung V_{B} bereitstellt, vermindert sich V_{B} bei Erhöhung der Zuleitungswiderstände 11 und 12 auf V_{S} = I_{S} x (R₁ + R₂). Sobald V_{S}, wie in Teilbild a) dargestellt, zum Zeitpunkt t₁ einen unteren Grenzwert V_{U} erreicht bzw. unterschreitet, schaltet der Signalstrom in den Teilbildern b) und c) auf den konstanten Diagnosepegel I_{UD} um und verharrt bei diesem Pegel bis zum Überschreiten einer Spannung V_{R} zum Zeitpunkt t₂ (Teilbild a)), wodurch die Rückkehr zum ursprünglichen Signalstrommuster bewirkt wird. Geeignete Werte von V_{U} liegen in einem Bereich von weniger als etwa 3 bis 5,5 V. Der Strom I_{UD} kann auf einen Sollwert im Bereich von etwa 1 bis 6 mA, insbesondere auf einen Sollwert im Bereich von etwa 3 bis 4 mA festgelegt werden.
Die besagte Schalthysterese wird bewirkt, in dem Schwelle V_{R}, welche die Rückkehr zur normalen Signalübertragung auslöst, höher liegt als Schwelle V_{U}. Sinnvolle Werte von V_{R} liegen zwischen etwa 5,5 und 7 V.

## Patentansprüche

1. Aktiver Magnetsensor, insbesondere zur Erfassung des Drehverhaltens eines Rades, umfassend einen magnetoelektrischen Wandler (2), welcher mit einem Modulator (5) elektrisch verbunden ist, eine Stromquellengruppe (4) umfassend eine oder mehrere Stromquellen, die den am Sensorausgang (k₃,k₄) ausgegebenen Signalstrom steuert, mit einer Unterspannungsüberwachungsschaltung (10), welche mit dem Sensorausgang (k₃,k₄) verbunden ist, welche das am Sensorausgang (k₃,k₄) anliegende elektrische Signal auf das Unterschreiten einer ersten vorgegebenen Schwellenspannung (V_{U}) hin überwacht und welche in Abhängigkeit vom Ergebnis dieser Überwachung den am sensorausgang (k₃,k₄) ausgegebenen Signalstrom durch Beeinflussung der Stromquellengruppe (4) steuert, **dadurch gekennzeichnet, daß** der Zustand der Unterspannung durch das Ausgeben eines Konstantstroms (I_{UD}) für die Dauer der erkannten Unterspannung an dem Sensorausgang signalisiert wird.

2. Magnetsensor nach Anspruch 1, **dadurch gekennzeichnet, daß** durch die Stromquellengruppe auf den Signalstrom Drehzahlstromimpulse aufmoduliert werden, die eine Bewegungsinformation eines am Wandler vorbeibewegten Encoders (3) repräsentieren.

3. Magnetsensor nach Anspruch 2, **dadurch gekennzeichnet, daß** im zeitlichen Verlauf zwischen den Drehzahlstromimpulsen Zusatzstromimpulse auf den Signalstrom durch die Stromquellengruppe aufmoduliert werden.

4. Magnetsensor nach mindestens einem der Ansprüche 1 bis 3, **dadurch gekennzeichnet, daß** dieser eine Beobachtungsschaltung (6) umfaßt, welche in Abhängigkeit der Spannung am Sensorausgang (k₃, k₄) eine Einspeisung von Zusatzsignalen auf das Drehzahlsignal vornimmt.

5. Magnetsensor nach mindestens einem der Ansprüche 1 bis 4, **dadurch gekennzeichnet, daß** die Stromquelle (4), der Modulator (5) und die Überwachungsschaltung (10) und ggf. die Beobachtungsschaltung (6) in einem Sensormodul (1) zusammengefaßt sind.

6. Magnetsensor nach mindestens einem der Ansprüche 1 bis 5, **dadurch gekennzeichnet, daß** die Unterspannungsüberwachungsschaltung (10) nach dem Erkennen einer Spannung unterhalb der ersten Schwellenspannung (V_{U}) für eine bestimmte Zeit ein Unterspannungsstromsignal auslöst.

7. Magnetsensor nach Anspruch 6, **dadurch gekennzeichnet, daß** die Unterspannungsüberwachungsschaltung (10) so ausgelegt ist, daß das nach der Erkennung einer Unterspannung erzeugte Unterspannungsstromsignal erst dann beendet wird, wenn die Spannung oberhalb einer weiteren Schwellenspannung (V_{R}) liegt, wobei die weitere Schwellenspannung größer ist, als die erste Schwellenspannung.

8. Anordnung bestehend aus einem aktiven Magnetsensor gemäß mindestens einem der Ansprüche 1 bis 7 und mindestens einem elektronischen Steuergerät (9), **dadurch gekennzeichnet, daß** die Spannung an Sensorausgang (k₃, k₄) durch das Steuergerät (9) zum Zwecke der Signalübertragung abgesenkt wird und dieses Signal im aktiven Magnetsensor durch eine Beobachtungsschaltung (6) registriert wird.

## Claims

1. Active magnetic sensor, in particular for detecting the rotational behavior of a wheel, comprising a magneto-electric transducer (2) that is electrically connected to a modulator (5), a current source sub-assembly (4) comprising one or more current sources and controlling the signal current that is output at the sensor output (k₃, k₄), including an undervoltage monitoring circuit (10) which is connected to the sensor output (k₃, k₄) and monitors the electric signal prevailing at sensor output (k₃, k₄) with respect to whether the voltage falls below a first predetermined threshold voltage (V_{U}), and which controls the signal current output at the sensor output (k₃, k₄) in dependence on the result of this monitoring action by influencing the current source sub-assembly (4),
**characterized in that** the condition of the undervoltage is signaled by outputting a constant current (I_{UD}) for the duration of the undervoltage detected at the sensor output.

2. Magnetic sensor as claimed in claim 1,
**characterized in that** the current source sub-assembly is used to modulate rotational speed current pulses onto the signal current which represent a motion information of an encoder (3) that is passed by the transducer.

3. Magnetic sensor as claimed in claim 2,
**characterized in that** the current source sub-assembly is used to modulate additional current pulses onto the signal current in the time periods between the rotational speed current pulses.

4. Magnetic sensor as claimed in at least one of claims 1 to 3,
**characterized in that** said sensor comprises an observing circuit (6) which causes introduction of additional signals into the rotational speed signal in dependence on the voltage at the sensor output (k₃, k₄).

5. Magnetic sensor as claimed in at least one of claims 1 to 4,
**characterized in that** the current source (4), the modulator (5) and the monitoring circuit (10) and, as the case may be, the observing circuit (6) are grouped in a sensor module (1).

6. Magnetic sensor as claimed in at least one of claims 1 to 5,
**characterized in that** the undervoltage monitoring circuit (10) after detection of a voltage below the first threshold voltage (V_{U}) triggers an undervoltage current signal for a defined period of time.

7. Magnetic sensor as claimed in claim 6,
**characterized in that** the undervoltage monitoring circuit (10) is so configured that the undervoltage current signal produced after detection of an undervoltage will be terminated only when the voltage lies above another threshold voltage (V_{R}), with the additional threshold voltage exceeding the first threshold voltage.

8. Arrangement comprising an active magnetic sensor as claimed in at least any one of claims 1 to 7 and at least one electronic control unit (9),
**characterized in that** the voltage at the sensor output (k₃, k₄) is reduced by the control unit (9) for the purpose of signal transmission, and this signal is registered in the active magnetic sensor by an observing circuit (6).

## Revendications

1. Capteur magnétique actif, en particulier pour la détection du comportement de rotation d'une roue, comportant un convertisseur magnétoélectrique (2), lequel est électriquement raccordé à un modulateur (5), un groupe de sources de courant (4) comportant une ou plusieurs sources de courant qui commande le courant de signalisation émis au niveau de la sortie du capteur (k₃, k₄), avec un circuit de surveillance de la sous-tension (10) qui est relié à la sortie de capteur (k₃, k₄), lequel surveille si le signal électrique présent au niveau de la sortie de capteur (k₃, k₄) reste en dessous d'une première tension seuil prédéfinie (V_{U}) et lequel commande, en fonction du résultat de cette surveillance, le courant de signalisation émis au niveau de la sortie de capteur (k₃, k₄) par l'influence du groupe de sources de courant (4), **caractérisé en ce que** l'état de la sous-tension est signalé par l'émission d'un courant constant (I_{UD}) pour la durée de la sous-tension détectée, au niveau de la sortie de capteur.

2. Capteur magnétique selon la revendication 1, **caractérisé en ce que**, au moyen du groupe de sources de courant, sont modulées sur le courant de signalisation des impulsions électriques du nombre de tours qui représentent une information relative au mouvement d'un encodeur (3) déplacé sur le convertisseur.

3. Capteur magnétique selon la revendication 2, **caractérisé en ce que**, dans la courbe temporelle, entre les impulsions électriques du nombre de tours, sont modulées des impulsions électriques supplémentaires sur le courant de signalisation au moyen du groupe de sources de courant.

4. Capteur magnétique selon au moins l'une des revendications 1 à 3, **caractérisé en ce que** celui-ci comporte un circuit de surveillance (6), lequel effectue, en fonction de la tension au niveau de la sortie de capteur (k₃, k₄), une alimentation en signaux supplémentaires sur le signal du nombre de tours.

5. Capteur magnétique selon au moins l'une des revendications 1 à 4, **caractérisé en ce que** la source de courant (4), le modulateur (5) et le circuit de surveillance (10) et, le cas échéant, le circuit d'observation (6) sont rassemblés dans un module de capteur (1).

6. Capteur magnétique selon au moins l'une des revendications 1 à 5, **caractérisé en ce que** le circuit de surveillance de la sous-tension (10) déclenche, un signal électrique de sous tension pendant un certain temps, après la détection d'une tension en dessous de la première tension seuil (V_{U}).

7. Capteur magnétique selon la revendication 6, **caractérisé en ce que** le circuit de surveillance de la sous-tension (10) est conçu de telle sorte que le signal électrique de sous-tension, produit après de la détection d'une sous-tension, est terminé lorsque la tension se trouve au-dessus d'une autre tension seuil (V_{R}), l'autre tension seuil étant supérieure à la première tension seuil.

8. Dispositif composé d'un capteur magnétique actif conformément à au moins l'une des revendications 1 à 7 et au moins un appareil de commande électronique (9), **caractérisé en ce que** la tension au niveau de la sortie de capteur (k₃, k₄) est abaissée au moyen de l'appareil de commande (9) à des fins de transmission du signal et ce signal est enregistré dans le capteur magnétique actif par un circuit d'observation (6).
